# EUROPÄISCHE PATENTANMELDUNG

(11) **EP 0 899 515 A2**
(43) Veröffentlichungstag der Anmeldung: **03.03.1999**
(21) Anmeldenummer: 98113382.0
(22) Anmeldetag: 17.07.1998
(51) Int. Cl.: F24D 3/12

(54) **Wärmetauscher, insbesondere als Heizungselement**

(30) Priorität: 30.08.1997 DE 29715601 U
(71) Anmelder: D.F. LIEDELT " VELTA" PRODUKTIONS- UND VERTRIEBS-GMBH, 22851 Norderstedt (DE)
(72) Erfinder: Wenting, Manfred, 22848 Norderstedt (DE)
(74) Vertreter: von Raffay, Vincenz, Dipl.-Ing.

(57) **Zusammenfassung**

Der Wärmetauscher, bei dem es sich insbesondere um ein Heizungselement handelt, besteht aus einem vorgeformten Rohrregister (2) aus Kunststoff und einer Trägerplatte (1). Um diesen Wärmetauscher preisgünstig herzustellen und universell sowohl als Wandheizung, Fußbodenheizung, Deckenheizung, Heizkörper u. dgl. auch zu Kühlzwecken zu verwenden, besteht die Trägerplatte (1) aus einer Kunststoff-Folie aus thermoplastischem Kunststoff, in die das Rohrregister (2) durch Erwärmen und Tiefziehen eingebettet und mit dieser zu einer stabilen Baueinheit verbunden ist. Das Kunststoffrohr wird unmittelbar nach dem Extrudieren, d.h. wenn es noch warm ist, in die für das Rohrregister gewünschte Form, beispielsweise einer Mäander- oder einer Schlangenform, gebracht. Das auf diese Weise hergestellte Rohrregisterelement wird dann mit einer Kunststoff-Folie zu einer einheitlichen und stabilen Baueinheit dauerhaft verbunden.

## Beschreibung

Die Erfindung betrifft einen Wärmetauscher nach dem Oberbegriff des Anspruches 1.

Derartige Wärmetauscher, die grundsätzlich für Heiz- und Kühlzwecke eingesetzt werden können, sind in den unterschiedlichsten Ausgestaltungen, so beispielsweise aus der EP-PS 51 713 bekannt.

Bei diesen bekannten Bauelementen, bei denen es sich häufig um Wandheizungen handelt, geht es grundsätzlich darum, ein stabiles, aber leichtes Bauelement zu schaffen, das für einen guten Wärmeübergang sorgt.

Auf der anderen Seite sind die unterschiedlichsten Systeme bekannt, um Kunststoffrohre als Fußbodenheizung zu verlegen. Die Kunststoffrohre werden hierbei mechanisch kraft- oder formschlüssig mit bestimmten Verlegeplatten aus Kunststoff-Folien verbunden, um die Kunststoffrohre in einer bestimmten Registerform zu halten und zu verlegen. Die Kunststoffrohre werden in Mäander- oder bifilarform verlegt und durch die Noppen in der Folie fixiert und gehalten.

Die Kunststoffrohre, die das Rohrregister bilden, werden aus einem thermoplastischen Kunststoff, beispielsweise PE-X-Material, durch Extrudieren hergestellt. Nach dem Erkalten können sie kalt gebogen werden. Die Form, in die sie gebogen werden, ist dann aber nicht stabil. Eine stabile Form entsteht nur, wenn die Kunststoffrohre im erwärmten Zustand bei dem genannten PE-X-Material, beispielsweise bei ca. 133°C, mit Hilfe einer Biegeschablone gebogen werden. Nach dem Abkühlen in Wasser oder an der Luft bleibt die hergestellte Form erhalten, ohne daß eine wesentliche Rückstellung stattfindet.

Der Erfindung liegt nun die Aufgabe zugrunde, einen Wärmetauscher der eingangs genannten Art zu schaffen, der preiswert hergestellt werden kann und universell sowohl als Wandheizung, Fußbodenheizung, Deckenheizung, Heizkörper und dergleichen, verwendet werden kann, auch zu Kühlzwecken. Gleichzeitig soll eine Vorrichtung zur Herstellung eines derartigen Wärmetauschers geschaffen werden.

Diese Aufgabe wird grundsätzlich durch das Kennzeichen des Anspruches 1 bzw. des Anspruches 3 bei einer entsprechenden Vorrichtung gelöst.

Erfindungsgemäß wird das Kunststoffrohr unmittelbar nach dem Extrudieren, d.h. wenn es noch warm ist, in die für das Rohrregister gewünschte Form, beispielsweise eine Mäanderform oder eine andere Schlangenform, gebracht. Das auf diese Weise hergestellte Rohrregisterelement wird dann mit einer Kunststoff-Folie zu einer einheitlichen, stabilen Baueinheit dauerhaft verbunden. Zu diesem Zweck wird die Kunststoff-Folie über das in der gewünschten Form vorliegende Rohrregister gelegt und so verformt, daß das Rohrregister in die Kunststoff-Folie eingebettet und mit dieser fest verbunden ist. Es entsteht so eine leichte, preiswerte und vielseitig einsetzbare Baueinheit.

Die auf diese Weise hergestellten Wärmetauscher können durch Verbindungselemente miteinander in Parallel- oder Reihenschaltung verbunden werden. Sie können als Fußbodenheizung unsichtbar verlegt werden. Beim Verlegen als Fußbodenheizung ist es nicht mehr erforderlich, besondere Trägermatten einzusetzen, da die verformte Tiefziehfolie die Funktion der Trägerplatte übernimmt. Es ist auch nicht mehr notwendig, das Kunststoffrohr durch Clips oder dergleichen zu befestigen.

Es ist auch möglich, die verformte Kunststoff-Folie mit einer Metallplatte zu einem Heizkörper, der dann ein Wandheizkörper sein kann, zu verbinden. Die Metallplatte sorgt für Festigkeit und Verteilung und Abgabe der Wärme.

In vorteilhafter Weise erfolgt die Herstellung mit Hilfe einer Tiefziehvorrichtung, so wie sie Gegenstand des Anspruches 3 ist.

Im folgenden wird die Erfindung unter Hinweis auf die Zeichnung anhand eines Ausführungsbeispieles näher erläutert.

Es zeigt:
- Fig. 1: eine schematische, perspektivische Ansicht eines Wärmetauschers nach der Erfindung; und
- Fig. 2: einen schematischen Querschnitt durch eine Vorrichtung zur Herstellung des Wärmetauschers nach Fig. 1.

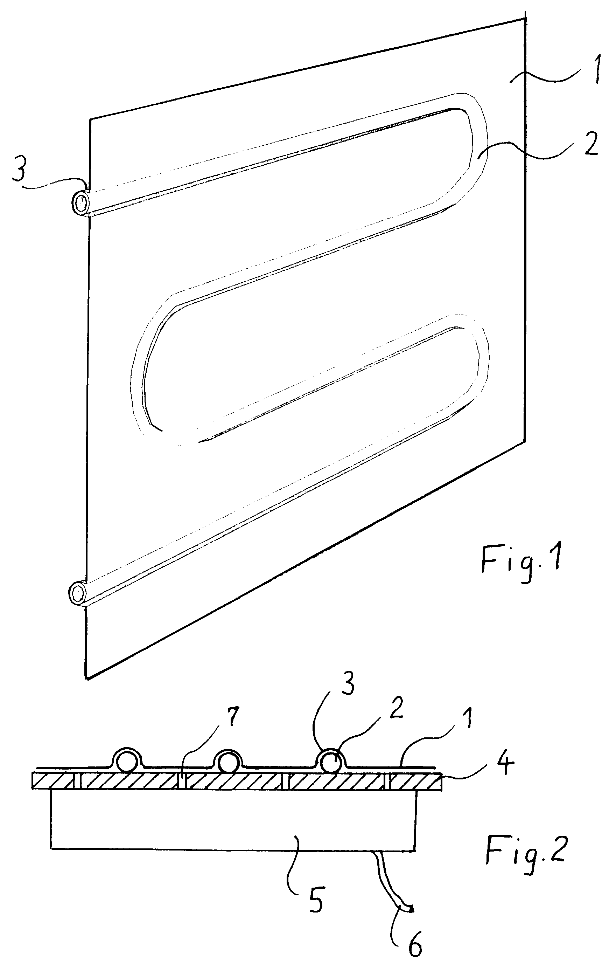

Der in Fig. 1 dargestellte Wärmetauscher besteht aus einem mäanderförmig verformten Kunststoffrohr 2, das in eine Kunststoff-Folie 1 eingebettet ist. Die Kunststoff-Folie umschlingt bei 3 das Kunststoffrohr.

Das in Fig. 1 dargestellte Element bildet einen Wärmetauscher, der so als Fußbodenheizung verlegt und mit anderen, gleichen oder ähnlich geformten und ausgestalteten Elementen verbunden werden kann.

In Fig. 2 ist schematisch eine Möglichkeit dargestellt, einen solchen Wärmetauscher herzustellen. Zuerst wird das Rohrregister durch Verformung, vorzugsweise unmittelbar nach dem Extrudieren, in der gewünschten Form hergestellt und auf die Auflageplatte 4 der Tiefziehvorrichtung aufgelegt. Dann wird die tiefzuziehende Folie 1 aufgelegt und erwärmt. Durch Anlegen von Unterdruck in dem Raum 5 werden die Öffnungen 7 mit Unterdruck versorgt und die erwärmte weiche Kunststoff-Folie 1 wird angesogen. Hierbei verbindet sich die Kunststoff-Folie 1 auch mit dem Kunststoffrohr 2. Es entsteht ein stabiles, leichtes, flaches Gebilde, über das die Rohre entsprechend der Registerform vorstehen. Dieses Gebilde kann zu Heizkörpern oder anderen Wärmetauschern, auch zu Kühlzwecken, weiterverarbeitet werden.

Die Unterdruckkammer 5 ist über einen Schlauch 6 mit einer nicht gezeigten Unterdruckquelle verbunden.

## Patentansprüche

1. Wärmetauscher, insbesondere als Heizungselement, aus einem vorgeformten Rohrregister (2) aus Kunststoff und einer Trägerplatte (1), dadurch gekennzeichnet, daß die Trägerplatte (1) aus einer Kunststoff-Folie aus thermoplastischem Kunststoff besteht, in die das Rohrregister (2) durch Erwärmen und Tiefziehen eingebettet und mit dieser zu einer stabilen Baueinheit verbunden ist.

2. Wärmetauscher nach Anspruch 1, dadurch gekennzeichnet, daß die tiefgezogene Trägerplatte (1) aus Kunststoff zur Bildung eines Heizkörpers an einer Metallplatte befestigt ist.

3. Vorrichtung zur Herstellung eines Wärmetauschers nach Anspruch 1, gekennzeichnet durch eine Tiefziehvorrichtung mit einer Auflageplatte (4), auf die das Rohrregister (2) und auf dieses die tiefzuziehende Kunststoff-Folie auflegbar ist, und
die zum Tiefziehen der Kunststoff-Folie mit Unterdruck beaufschlagbar ist (Öffnungen (7).
